# EUROPEAN PATENT APPLICATION

(11) **EP 1 367 661 A2**
(43) Date of publication of application: **03.12.2003**
(21) Application number: 02015726.9
(22) Date of filing: 12.07.2002
(51) Int. Cl.: H01M 4/48, H01M 4/50, H01M 4/52

(54) **Cathode active material for lithium ion secondary battery**

(30) Priority: 05.04.2002 JP 2002103175
(71) Applicant: Hitachi, Ltd., Chiyoda-ku, Tokyo 101-8010 (JP)
(72) Inventor: Yamaki, Takahiro, Hitachi-shi, Ibaraki 316-0025 (JP); Kasai, Masahiro, Mito-shi, Ibaraki 310-0912 (JP); Kumashiro, Yoshiaki, Toride-shi, Ibaraki 302-0013 (JP); Hirashige, Takayuki, Hitachi-shi, Ibaraki 316-0036 (JP)
(74) Representative: Strehl Schübel-Hopf & Partner

(57) **Abstract**

A lithium ion secondary battery having high energy density and of excellent safety, and a cathode active material used therefor are provided. The cathode active material is a Li-containing composite oxide comprising a plurality of transition metal elements selected from Cr, Mn, Fe, Co, Ni and Cu, in which the composition of the transition metal elements is in a range not inclined to particular transition metal elements. The composite oxide having a crystal structure in which the range of an angle β formed between a axis and b axis of the crystallographic structure is controlled as: 90° < β ≦ 110°. The composite oxide is used as the cathode active material of a lithium ion secondary battery.

## Description

### BACKGROUND OF THE INVENTION

The present invention relates to a cathode active material used for a cathode of a lithium ion secondary battery and a lithium ion secondary battery using the active material.

A lithium ion secondary battery uses a cathode active material comprising a composite oxide of lithium and a transition metal such as Mn, Co or Ni for a cathode, a lithium intercalating anode active material mainly comprising carbon such as graphite or amorphous carbon for an anode, and a non-aqueous electrolyte having lithium ions for electrochemically bonding the cathode and the anode. During charging, lithium ions are deintercalated from the cathode active material into the non-aqueous electrolyte and lithium ions corresponding to the amount of the deintercalated lithium ions are intercalated from the non-aqueous electrolyte to the anode active material. On the contrary, during discharging, lithium ions intercalated by charging to the anode active material are deintercalated into the non-aqueous electrolyte and intercalated in the cathode active material.

Since the capacity (electrical quantity) obtained from the lithium ion secondary battery corresponds to the amount of lithium ions deintercalated in the anode active material during charging, it depends on the capacity of the cathode active material as the amount of lithium that can be deintercalated and intercalated reversibly from and into the cathode active material, and it has been required to increase the capacity of the cathode active material.

Further, when the cathode and the anode constituting the lithium ion secondary battery are short-circuited, since the energy accumulated on the cathode and the anode are released in a short time, the temperature of the battery increases. Likewise, in a case where the lithium ion secondary battery should be over charged, the temperature of the battery increases due to the side reaction in the inside of the battery. If the thermal stability of the cathode active material is low, the decomposition of the active material itself is also promoted to accelerate the rise in the temperature of the battery, which remarkably increases the temperature of the battery, thereby possibly causing abnormality such as fire or bursting of the battery. Accordingly, a need exists for an improvement in the thermal stability of the cathode active material.

As the energy accumulated in the battery increases along with an increase in the capacity of the cathode active material and an increase in the size of the battery, since the rise in the temperature of the battery upon short circuit or the like is further increased, the possibility of causing abnormality is also increased. Accordingly, there is a requirement for the cathode active material of the lithium ion secondary battery to increase the capacity and, at the same time, improve the thermal stability, which are contrary to each other. Also the lithium ion secondary battery is required to satisfy both increased capacity and safety.

As the cathode active material in which a small amount of Mn of a layered lithium manganate (LiMnO₂), different from spinel type lithium manganate (LiMn₂O₄), is replaced with other elements, Japanese Patent Laid-open No. 2001-122628, for example, discloses a cathode active material having a capacity of 160 mAh/g in which Mn in LiMnO₂ is substituted up to 25% for Fe and Cr.

As the cathode active material of the lithium ion secondary battery, hexagonal system layered oxides such as lithium cobaltate (LiCoO₂) and lithium nickelate (LiNiO₂) or cubic system spinel type composite oxides typically represented by lithium manganate (LiMn₂O₄) are generally known. Among the layered oxides, the discharging capacity per unit weight within a practical range is about 150 mAh/g for LiCoO₂ and about 180 mAh/g for LiNiO₂. Thus, they have a relatively large capacity but show low thermal stability and, particularly, LiNiO₂ has a large amount of heat generation upon decomposition and has a worry of causing fire or bursting of the battery.

On the other hand, it has been known that while LiMn₂O₄ is excellent in the thermal stability, the capacity per unit weight of the cathode material is about 145 mAh/g in view of the theoretical amount and it is about 100 mAh/g in a practical range, which is not so high.

Further, for a layered lithium manganate (LiMnO₂) and a cathode active material in which a small amount of Mn thereof is substituted for other elements shown in Japanese Patent Laid-open No. 2001-122628, while larger capacity than that of spinel type lithium manganese (LiMn₂O₄) can be expected, they are not always sufficient in view of the thermal stability like the layered oxides such as lithium cobaltate (LiCoO₂) and lithium nickelate (LiNiO₂).

Accordingly, the lithium ion secondary battery required for larger capacity in the feature has a subject of providing a material capable of making the larger capacity and thermal stability compatible for the cathode active material of a lithium ion secondary battery and, further, satisfying both the higher energy density and safety simultaneously for the lithium ion secondary battery,

### SUMMARY OF THE INVENTION

An object of this invention is to provide a cathode active material for use in a lithium ion secondary battery having large capacity and excellent in thermal stability, as well as a lithium ion secondary battery using the same having a high energy density and excellent safety.

The foregoing object can be attained in a cathode active material used for a cathode of a lithium ion secondary battery in which the cathode active material is a composite oxide of a compositional formula: LiM1₁₋ₓ₋ₐM2ₓAₐO_{2-y}X_{y} (where M1 is one or more of transition metal elements selected from Mn, Co and Ni, M2 is one or more of transition elements selected from Cr, Fe and Cu, A is at least one typical element selected from Mg and Al, X is an anion excluding oxygen, and 0.3 ≦ x ≦ 0.7, 0 ≦ a ≦ 0.1, and 0 ≦ y ≦ 0.1).

Further, this invention also provides a lithium ion secondary battery using the composite oxide described above as the cathode active material.

Further, the composite oxide comprises a monoclinic system composite oxide.

Further, the monoclinic system composite oxide has an angle β formed between a axis and c axis of crystallographic axes within a range : 90° < β ≦ 110°.

Further, the monoclinic system composite oxide has at least one peak in a range of 2θ from 41° to 45° in X-ray diffractiometry using with CuKa radiation.

Further, the monoclinic system composite oxide has a feature having at least one peak between diffraction peaks from (110) face and (11-1) face indexed by monoclinic system.

### BRIEF DESCRIPTION OF THE ACCOMPANYING DRAWINGS

Other objects and advantages of the invention will become apparent from the following description of embodiments with reference to the accompanying drawings in which:
Fig. 1 is an X-ray diffraction chart of an example of a cathode active material according to this invention;
Fig. 2 is a schematic view of a electrochemical cell for examining electrochemical characteristics of a cathode active material; and
Fig. 3 is a cross sectional view partially cut away for a constitution of a lithium ion secondary battery according to this invention.

### DESCRIPTION OF PREFERRED EMBODIMENTS

A description will be made of preferred embodiments according to this invention.

A lithium ion secondary battery comprises a cathode, an anode, a mechanism for electrically insulating the cathode from the anode, and a non-aqueous electrolyte. More specifically, the cathode has a cathode active material as a composite oxide of lithium and transition metal capable of reversibly intercalating and deintercalating lithium, and the anode has an anode active material such as a carbon material capable of reversibly reacting or intercalating lithium. In addition, the secondary battery has a separator for electrically insulating the cathode and the anode and a non-aqueous electrolyte containing a lithium salt for electrochemically bonding the cathode and the anode. During charging, lithium ions deintercalated from the cathode active material into the non-aqueous electrolyte, and the amount of lithium ions corresponding to the deintercalated lithium ions is intercalated from the non-aqueous electrolyte to the anode active material. On the contrary, during discharging, lithium ions intercalated to the anode active material during charging are deintercalated into the non-aqueous electrolyte and intercalated to the cathode active material. Since the capacity (electrical quantity) obtained from the lithium ion secondary battery corresponds to the amount of lithium ions intercalated in the anode active material during charging, it greatly depends on the amount of lithium that can be deintercalated/intercalate reversibly in the cathode active material, that is, on the capacity of the cathode active material.

Incidentally, in the event that the cathode and the anode constituting the lithium ion secondary battery are in contact with each other in the battery because of accidental external forces, that is, internally short-circuited, or externally short-circuited, since the energy accumulated on the cathode and the anode is released in a short time, the temperature of the battery increases. Likewise, in the event that the lithium ion secondary battery should be over charged, the temperature of the battery increases due to the side reaction in the inside of the battery. If the thermal stability of the cathode active material is low, the decomposition of the active material itself is also promoted to accelerate the rise in temperature of the battery, which remarkably increases the temperature of the battery, thereby possibly causing abnormality such as fire or bursting of the battery. Accordingly, a need exists for an improvement in the thermal stability of the cathode active material.

As the energy accumulated in the battery increases along with an increase in the capacity of the cathode active material and an increase in the size of the battery, since a rise in the temperature of the battery upon short circuit or the like is further increased, the possibility of causing abnormality is also increased. Accordingly, there is a requirement for the cathode active material of the lithium ion secondary battery to increase the capacity and, at the same time, improve the thermal stability, which are contrary to each other. Also the lithium ion secondary battery is required to satisfy both increased capacity and safety.

As a result of the study made by the present inventors for solving the subject described above, it has been found that both the capacity and the safety can be satisfied simultaneously by adopting an appropriate range for the composition of a composite oxide of lithium and a plurality of transition metals that constitute the cathode active material.

The cathode active material for use in the lithium ion secondary battery according to this invention is a composite oxide of a compositional formula: LiM1₁₋ₓ₋ₐM2ₓAₐO_{2-y}X_{y} (where M1 is one or more of transition metal elements selected from Mn, Co and Ni, M2 is one or more of transition elements selected from Cr, Fe and Cu, A is at least one typical element selected from Mg and Al, X is an anion excluding oxygen, and 0.3 ≦ x ≦ 0.7, 0 ≦ a ≦ 0.1, and 0 ≦ y ≦ 0.1).

That is, the cathode active material according to this invention comprises at least one transition metal element M1 selected at least from Mn, Co and Ni and the compositional range thereof is: 0.2 ≦ 1-x-a ≦ 0.7. Mn, Co or Ni is an essential element that the composite oxide thereof functions as the cathode active material of the lithium ion secondary battery and no sufficient capacity can not always be obtained in a case: 0.2 > 1-x-a. In addition, the cathode active material according to this invention comprises one or more of transition metal elements M2 selected at least from Cr, Fe and Cu, and the compositional range thereof is: 0.3 ≦ x ≦ 0.7. That is, in view of the compositional formula described above, the cathode active material according to this invention comprises at least two kinds of transition metals of a group of transition metal elements M1 comprising Mn, Co and Ni and a group of transition metal elements M2 comprising Cr, Fe and Cu, in which the specified element does not exceeds 70% of the entire transition metal elements contained in the composition. With such a composition, a cathode active material having excellent thermal stability can be obtained. Although the mechanism is not always apparent, the presence of elements of different ionic radius of the two groups at an appropriate ratio in the crystal structure probably exhibits the effect of suppressing movement of elements in the decomposing reaction to provide the effect of the thermal stability.

When charging/discharging are conducted in the lithium ion secondary battery, since lithium ions are deintercalated from and intercalated to the cathode active material, the Li composition in the compositional formula described above changes. Accordingly, the Li compositional ratio is 1 in the compositional formula, which shows the initial composition upon synthesis. Further, a shows the compositional ratio of the typical element A constituting the cathode active material. There is no particular restriction on the kind of the typical element so long as it does not hinder the object of the invention and it is desirably an element selected from Mg and Li. Since the synthesis for the cathode active material is difficult in the compositional range of: a > 0.1, a desired range is 0 ≦ a ≦ 0.1. Further, y represents the compositional ratio of anion other than oxygen constituting the cathode active material. There is no particular restriction on the kind of the anion so long as it does not hinder the object of the invention and it is preferably fluorine. Since the synthesis of the cathode active material is difficult the compositional range of y > 0.1, its preferred range is : 0 ≦ y ≦ 0.1.

Further, more excellent heat stability can be obtained by controlling the crystal structure of the composite oxide of lithium and a plurality of transition metals constituting the cathode active material. That is, the cathode active material according to this invention is in the form of a monoclinic system composite oxide at least containing Li, one of transition metal elements (M1) selected from Mn, Co and Ni, and one or more of transition metal elements (M2) selected from Cr, Mn, Fe, Co, Ni and Cu excluding M1.

The monoclinic system has a crystal structure in which the lengths of a axis, b axis and c axis of crystallographic axes forming the crystal structure are different from one another with an angle β formed between a axis and c axis being β ≠ 90°. At β = 90°, the crystal structure is an orthorhombic system and since the monoclinic system has lower asymmetry than the orthorhombic system, it probably shows an effect of suppressing movement of elements in the thermal decomposition reaction and provides the effect of the thermal stability. That is, more excellent thermal stability can probably be obtained by causing the elements of different ionic radii at an appropriate ratio in the crystal structure having the effect of the thermal stability.

Further, more excellent thermal stability can be obtained by further controlling the crystal structure of the monoclinic system composite oxide of lithium and a plurality of transition metals constituting the cathode active material. That is, the cathode active material according to this invention is also in the form of a monoclinic system composite oxide at least containing Li, one transition metal element (M1) selected from Mn, Co and Ni and one or more of transition metal elements (M2) selected from Cr, Mn, Fe, Co, Ni and Cu excluding M1 with the range of an angle β formed between a axis and c axis of crystallographic axes thereof being 90° < β ≦ 110°. That is, a cathode active material having excellent thermal stability can be obtained by defining the angle β formed between a axis and c axis in the monoclinic structure as: 90° < β ≦ 110°. At β = 90°, the crystal form is a rhombic system and has a less effect of suppressing the movement of elements in the thermal decomposition reaction. Further, at β > 110°, distortion in the crystal structure is large and the effect of the thermal stability is probably small.

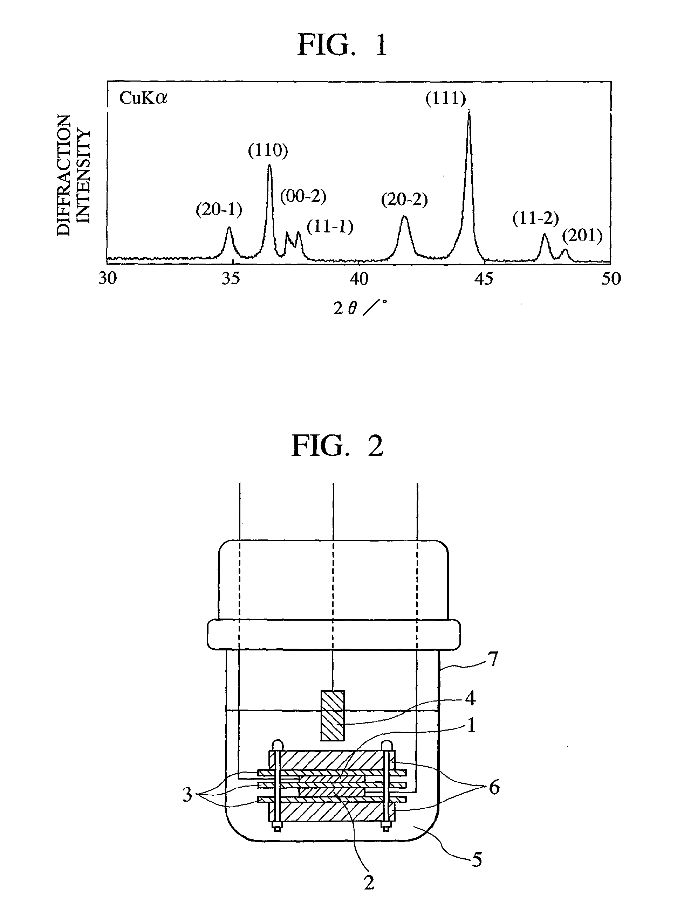

The feature of the monoclinic system cathode active material of large capacity having more excellent thermal stability is to have at least one peak within a range of 2θ from 41° to 45° in the X-ray diffractiometry with CuKa radiation. Likewise, another feature of the monoclinic system cathode active material of large capacity having more excellent thermal stability is to have at least one peak between diffraction peaks from (110) face and (11-1) face indexed by the monoclinic system in the X-ray diffractiometry with CuKa radiation. Fig. 1 shows an X-ray diffraction pattern at 2θ = 30° to 50° with CuKa radiation for LiMn_{0.5}Cr_{0.5}O₂ as an example of the cathode active material according to this invention. As a result of the analysis for the pattern, the crystal structure of this active material is a monoclinic system with the β value being 99°. A peak attributable to the (20-2) face is observed near the 2θ value of 41.8°, and a peak (00-2) is present at 37.2° between (110) face at 36.5° and (11-1) face at 37.7°.

A method of synthesizing the composite oxide as the cathode active material according to this invention will be described in details.

The composite oxide in this invention can be synthesized by the same method as a general synthesis method for inorganic compounds. That is, the composite oxide can be synthesized by weighing a plurality of compounds as the starting material so as to provide a desired compositional ratio for lithium, transition metal elements, typical elements and anion and then homogeneously mixing and baking them. However, to obtain the composite oxide in this invention, appropriate starting materials and appropriate baking conditions have to be selected properly depending on the desired composition and crystal structure. For the compounds as the starting material, hydroxides, chlorides, nitrates and carbonates of lithium can be used for the lithium compound. As the compounds for the transition metal elements, suitable compounds thereof can be used and, for example, oxide, hydroxides, chloride, nitrates, carbonates, sulfates and organic acid salts can be used. For example, in the case where M is Co, Mn and Fe, manganese dioxide, γ-MnOOH, manganese carbonate, manganese nitrate, manganese hydroxide, Co₃O₄, CoO, Fe₂O₃, Fe₃O₄ and the like can be used.

As the starting material for the typical elements, oxide, hydroxides, chlorides, nitrates, carbonates, sulfates and organic acid salts suitable to respective elements can be used. Further, as the starting material for the anion, lithium fluoride can be used, for example, in a case of fluorine.

A compound containing two or more of elements in the starting material for Li, transition metal elements and typical element can be used as the starting material. For example, hydroxides containing Co and Mn can be used as the starting material by precipitating Co and Mn by adding an alkali solution to a weakly acidic solution containing them.

The step of mixing and baking the starting materials may be, optionally, a production step of repeating mixing and baking steps. In this case, appropriate mixing condition and baking condition can be selected. Further, in a case of the production process of repeating the mixing and baking steps, starting materials may properly be added upon repeating the mixing steps so as to provide an aimed compositional ratio in the final baking step.

A preferred baking temperature is different depending on the starting materials used and the stage of the steps and it is preferably in the range from 400 to 1200°C and, particularly, it is preferred to conduct baking at 700°C to 1100°C in the final baking step.

The atmosphere for the baking is selected properly from atmospheric air, in vacuum, in oxygen atmosphere, hydrogen atmosphere or inert gas atmosphere such as nitrogen or rare gas. Further, it is also possible to conduct baking optionally in a pressurized atmosphere. Gaseous phase starting materials may be used and baking in an atmosphere containing such starting gases may be performed.

The crystal structure of the resultant composite oxide can be recognized by pulverizing the resultant composite oxide in a mortar as required, and by conducting, for example, X-ray diffractiometry with CuKa radiation as a radiation source. The measurement is preferably conducted under the conditions, for example, at a tube voltage of 50 kV, a tube current of 200 mA and at a diffraction rate of 0.05°/sec or less, more preferably, 0.01°/sec.

An example of a method of measuring the discharging capacity of the cathode active material in this invention will be explained.

An electrochemical cell shown below is prepared and electrochemical characteristic of the cathode active material is measured at a reference potential of metal Li. The electrochemical cell has a constitution as shown in Fig. 2 using a test cathode 1 containing the cathode active material of this invention, a counter electrode 2 using metal Li and separators 3 in which they are stacked in the order of the separator, counter electrode, separator, test cathode and separator. The stack is put between stainless steel plates 6 under pressure and immersed in an organic electrolyte 5 in a container 7. Further, a reference electrode 4 using metal Li is also suspended in the electrolyte. The electrochemical cell is manufactured in a glove box in which an inert gas such as argon gas is sealed.

The test cathode is prepared by the following method. Eight percent by weight of lumpy graphite and 2% by weight of acetylene black are admixed as a conductive agent to 85% by weight of a cathode active material, which is dispersed in a solution prepared by previously dissolving 5% by weight of polyvinylidene fluoride (PVDF) as a binder in N-methylpyrrolidone (NMP) to form cathode mix slurry. The cathode mix slurry is uniformly coated and dried on one surface of an aluminum foil of 20 µm in thickness. The weight of the cathode mix after drying is set to 10 - 25 mg/cm². Subsequently, compression molding is conducted by a roll press such that the density of the cathode mix is 1.5 to 3.0 g/cm³. After the compression molding, it is punched out into a disk-shape of 15 mm in diameter with a punching tool to prepare the test cathode.

The separator comprises a finely porous polypropylene film of 25 µm in thickness. The test cathode is stacked such that the surface on which the cathode active material is present is opposed by way of the separator to the counter electrode. As the organic electrolyte, used is LiPF₆ corresponding to 1 mol/liter as an electrolyte dissolved in a solvent mixture of ethylene carbonate and diethyl carbonate at a weight ratio of 30:70.

The electrochemical characteristic of the cathode active material can be examined by using the electrochemical cell prepared as described above. The electrochemical characteristic is examined under a current value corresponding to 0.2C, preferably, 0.1C or less based on the estimated capacity of the tested cathode.

An example of concrete means for obtaining a lithium ion secondary battery according to this invention will be described.

The cathode is prepared as described below. The cathode active material powder of this invention and a conductive agent are mixed thoroughly. As the conductive agent, graphite type or amorphous carbon powder is preferably used. The mixing ratio of the cathode active material and the conductive agent is preferably such that the conductive agent is 7 to 25% of the cathode active material in weight ratios. A solution of a polyvinylidene fluoride (PVDF) as a binder dissolved in a solvent such as N-methylpyrrolidone (NMP) is added and further mixed into slurry.

The slurry described above is coated to an aluminum foil of 10 to 20 µm in thickness and dried at a temperature from 80 to 100°C. In the same procedure, the slurry is coated on both surfaces of the aluminum foil and dried. Subsequently, it is compression molded by a roll press, and cut into a predetermined size to prepare a cathode.

As the anode active material, metal lithium, carbon material, or a material capable of intercalating lithium, or forming a compound can be used, for example, with the carbon material being particularly preferred. The carbon material includes, for example, graphitic material or amorphous carbon material and their discharging behavior is different somewhat depending on the kind of the carbon material used for the anode active material. Since the graphitic material generally shows a flat discharging potential near 0.1 V based on the metal Li, a lithium ion secondary battery of stable discharging voltage can be obtained. Further, since the amorphous carbon material generally changes the potential continuously depending on the discharging depth, a lithium ion secondary battery capable of easily detecting the remaining capacity by a battery voltage can be obtained. Further, the material capable of intercalating lithium or forming a compound includes metals such as aluminum, tin, silicon, indium, gallium and magnesium, and alloys containing such elements and metal oxides such as of tin and silicon. Further, the material can also include composite materials of the metal, alloy or metal oxide, and a graphitic or amorphous carbon material.

The anode is prepared as described below. A carbon material is used for the anode active material in the example. A solution of PVDF dissolved into a solvent such as NMP is admixed as a binder with the anode active material to form slurry. The slurry is coated on a copper foil and dried at temperatures of 80 to 100°C. In the same procedures, it is coated and dried on both surfaces of the copper foil. Subsequently, it is compression molded by a roll press and cut into a predetermined size to prepare the anode.

A cylindrical battery is fabricated as described below. A separator comprising a porous insulator film of 15 to 50 µm in thickness is put between a cathode and an anode as a mechanism for electrically insulating the resultant cathode from anode, which is wound into a cylindrical shape to fabricate an electrode group and inserted into a battery vessel made of SUS or aluminum. One which is used as the separator may include porous insulative film made of resin such as polyethylene (PE) or polypropylene (PP) or laminate thereof, inorganic compounds such as alumina in the dispersed form.

A non-aqueous electrolyte formed by dissolving a lithium salt for electrochemical bonding the cathode and the anode into a non-aqueous solvent is poured in a battery vessel within an operation container in dry air or inert gas atmosphere and the vessel is sealed to form a battery.

The lithium salt supplies lithium ions moving in the electrolyte by charging/discharging of the battery, for which LiClO₄, LiCF₃SO₃, LiPF₆, LiBF₄, LiAsF₆ or the like may be used alone or in combination of two or more of them. The organic solvent can include, carbonates, esters and ethers including, for example, ethylene carbonate (EC), propylene carbonate, butylene carbonate, dimethyl carbonate (DMC), diethyl carbonate (DEC), methyl ethyl carbonate, diethyl carbonate and γ-butyrolactone. A non-aqueous solvent comprising one or mixture of two or more of them is used.

Various kinds of additives may also be added as necessary, for example, with an aim of suppressing side reactions of the battery and improving the stability. The additives used herein can include, for example, sulfur type compounds, phosphorus type compounds, those dissolved in the solvent and those serving also as the solvent.

The square type battery is formed as described below. Coating of the cathode and the anode is identical to a case of preparing the cylindrical battery. When the square battery is fabricated, a winding group is prepared around a square center pin as the center. In the same manner as in the cylindrical battery, it is contained in the battery vessel and, after pouring the electrolyte, the battery can is sealed. Further, a stack formed by stacking the separator, cathode, separator, anode, and separator in this order can be used instead of the winding group.

Since the cathode active material of large capacity and excellent thermal stability according to this invention is used, a lithium ion secondary battery at high energy density and of excellent safety can be obtained.

The method of examining the safety of a lithium ion secondary battery according to this invention will be explained; the method using internal short-circuit will be explained as an example in this case.

The lithium ion secondary battery is charged to a predetermined voltage. Since the accumulated energy is larger as the charging voltage is higher, this can be said more severe condition. After the charging, a member such as a nail is penetrated from the lateral side of the battery, and simultaneously, the presence or absence of abnormality such as, the actuation of an open cell valve, bursting or fire are examined. In addition, changes in the surface temperature of the battery are examined using thermocouples disposed on the surface of the battery. For the purpose of comparing the safety among a plurality of batteries different in view of the specifications from each other, it is preferred that the top end shape and the diameter of nails used for the penetration of the battery are identical and it is also preferred that the penetrating speed is controlled to a constant speed. Further, it is more preferred to conduct a plurality of tests even for the battery of an identical specification.

The application use of the lithium ion secondary battery according to this invention has no particular restriction and it is suitable as medium-to-large capacity power source for various kinds of industrial equipment. For example, it is suitable to a power source, for example, in electric automobiles, power generators driven by internal combustion engines, systems of mounting power generation engines such as fuel cells, or in hybrid type automobiles using both the powers from the power source of the internal combustion engines and from the electric motors. Further, it is also suitable as a power source for use in rail diesel cars mounting power generators, driven by internal combustion engines and power sources for power equipment such as lifts. Further, it is also suitable as a power source for use in various kinds of business or home electric storage systems. Further, other application uses of the lithium ion secondary battery according to this invention can include various kinds of portable equipment or information equipment, home electric equipment.

### [Example]

Examples of this invention will be described. This invention is not restricted to the examples described below.

### (Example 1)

As Example 1, cathode active material (1) (LiMn_{0.7}Cr_{0.3}O₂), cathode active material (2) (LiMn_{0.6}Cr_{0.4}O₂), cathode active material (3) (LiMn_{0.5}Cr_{0.5}O₂), cathode active material (4) (LiMn_{0.4}Cr_{0.6}O₄) and cathode active material (5) (LiMn_{0.3}Cr_{0.7}O₄) were synthesized.

After weighing lithium carbonate (Li₂CO₃), manganese dioxide (MnO₂) and chromium oxide (Cr₂O₃) as the starting material to a predetermined elemental ratio, they were wet-mixed with ethanol at room temperature for 30 min by a planetary type ball mill and dried to form a starting material powder. This powder was placed in an alumina box and then baked in an argon atmosphere at 900°C for 12 hours to obtain a cathode active material.

Each of the resultant cathode active material (1) to cathode active material (5) was pulverized in a mortar and the crystal structure was examined by powder X-ray diffractiometry with CuKa radiation. Table 1 shows the analysis based on the results of the examination. Table 1 shows the names and the compositions of the active materials and crystal systems.

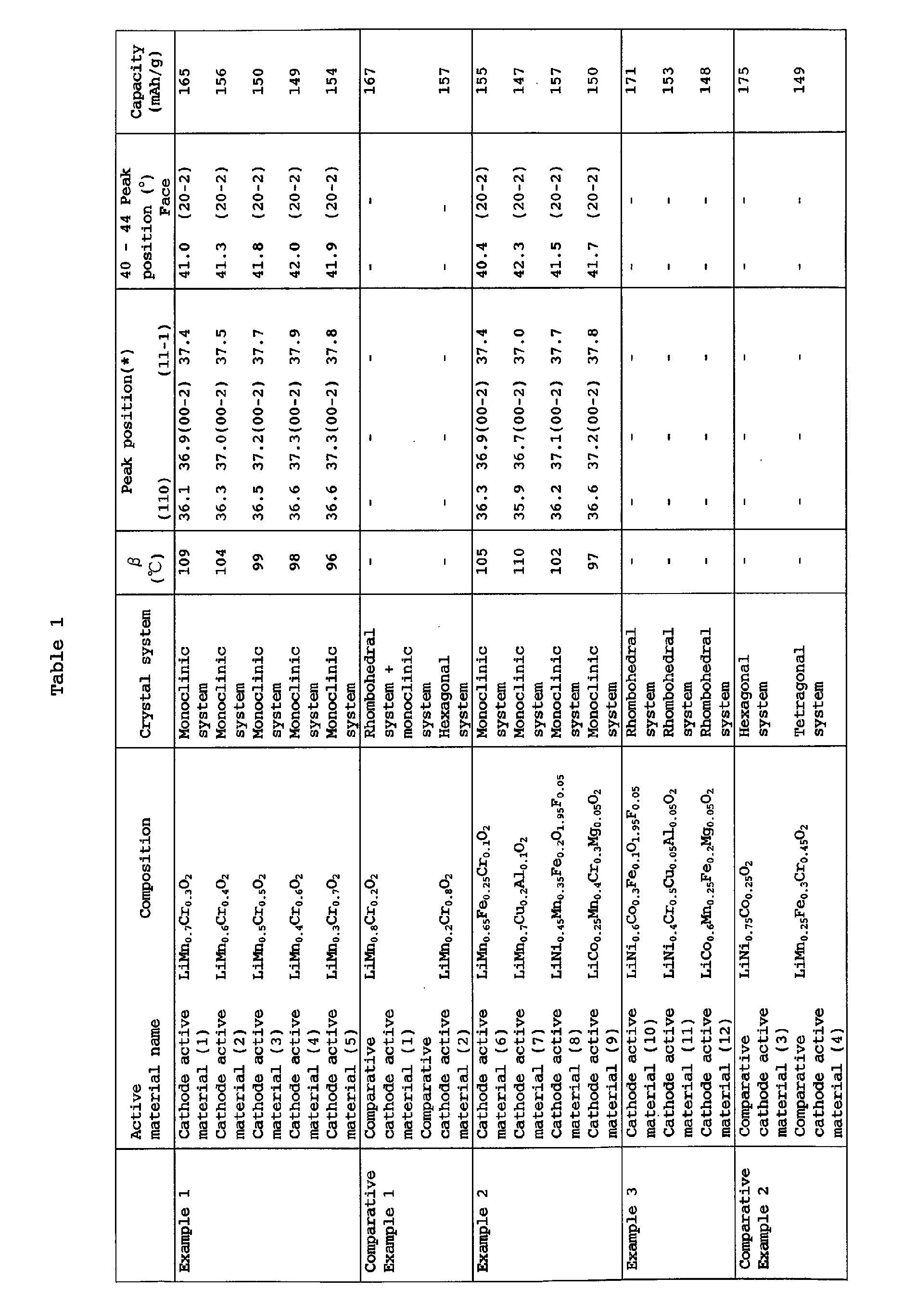

For the monoclinic system active material, Table 1 shows the angle β formed between a axis and c axis of the crystallographic axes, peak positions for (110) face and (11-1) face and crystal face of a peak situated between both of them and a peak position thereof, and the presence or absence of a peak for the range of 2θ value from 40° to 44° and the crystal face of the peak if present. Each of the obtained cathode active materials of Example 1 showed the monoclinic system and the β value ranged from 109° to 96°. Further, a peak of (20-2) face was observed for the 2θ value in the range from 40° to 44°, a peak (00-2) was present between the (110) face and the (11-1) face.

The obtained cathode active materials were examined for electrochemical characteristics by the following procedures. Eight percent by weight of lumpy graphite and 2% by weight of acetylene black were admixed as a conductive agent to 85% by weight of the cathode material, which was dispersed in a solution of 5% by weight of PVDF previously dissolved into NMP as a binder to form slurry. The cathode mix slurry was coated uniformly and dried on one surface of an aluminum foil of 20 µm in thickness and then compression molded such that the density of the cathode mix was 2.5 g/cm³ by a roll press. After compression molding, it was punched into a disk-shape of 15 mm diameter by using a punching tool to prepare a cathode to be tested.

An electrochemical cell shown in Fig. 2 using metal lithium for a counter electrode and a reference electrode was fabricated by using the cathode to be tested and a charging/discharging test for measuring the discharging capacity was performed. For the charging conditions, charging was conducted as constant current charging at a charging current of 0.2 mA/cm² and to a charging termination potential of 4.3 V on the basis of metal Li, while discharging was conducted as a constant current discharging at a discharging current of 0.2 mA/cm² to a charging termination potential of 2.7 V on the basis of metal Li. Table 1 shows the measurement of the capacities of cathode active materials (1) to (5). The capacity was 165 mAh/g for the cathode active material (1), 156 mAh/g for the cathode active material (2), 150 mAh/g for the cathode active material (3), 149 mAh/g for the cathode active material (4) and 157 mAh/g for the cathode active material (5). Accordingly, larger capacity was obtained as the effect of the invention compared with spinel lithium manganate (LiMn₂O₄) of Comparative Example 5 to be described later.

### (Comparative Example 1)

The cathode active materials were synthesized as Comparative Example 1 in the same manner as in Example 1 except the change of the weighing ratio of the starting materials, that is, a comparative cathode active material (1) (LiMn_{0.8}Cr_{0.2}O₂) and a comparative cathode active material (2) (LiMn_{0.2}Cr_{0.8}O₂).

The crystal structure was examined by powder X-ray diffractiometry with CuKα radiation in the same manner as in Example 1. Table 1 shows the analysis based on the results of the examination. The obtained comparative cathode active material (1) was a mixed phase of monoclinic and rhombic systems. Further, the comparative cathode active material (2) had a hexagonal system crystal structure.

A charging/discharging test for measuring the charging capacity was performed in the same manner as in Example 1. Table 1 shows the measurement of the capacity of each cathode active material of Comparative Example 1. The capacity was 167 mAh/g for the comparative cathode active material (1) and 157 mAh/g for the comparative cathode active material (2).

### (Example 2)

As Example 2, a cathode active material (6) (LiMn_{0.65}Fe_{0.25}Cr_{0.1}O₂), a cathode active material (7) (LiMn_{0.7}Cu_{0.2}Al_{0.1}O₂), a cathode active material (8) (LiNi_{0.45}Mn_{0.35}Fe_{0.2}O_{1.95}F_{0.05}), and a cathode active material (9) (LiCo_{0.25}Mn_{0.4}Cr_{0.3}Mg_{0.05}O₂) were synthesized.

As the starting materials, lithium carbonate (Li₂CO₃), lithium fluoride (LiF), manganese dioxide (MnO₂), chromium oxide (Cr₂O₃), nickel oxide (NiO), cobalt oxide (CoO), iron oxide (Fe₂O₃), copper oxide (CuO), aluminum hydroxide (Al₂(OH)₃), and magnesium hydroxide (Mg(OH)₂) were used. After weighing them so as to form a desired composition, they were wet-mixed with ethanol at room temperature for 30 min by a planetary type ball mill and dried to form a starting material powder. They were placed in an alumina box and baked in an argon atmosphere at 900°C for 12 hours to obtain cathode active materials.

Each of the cathode active materials of Example 2 was examined for the crystal structure by powder X-ray diffractiometry with CuKα radiation in the same manner as in Example 1. Table 1 shows the analysis based on the result of the examination. Each of the obtained cathode active materials of Example 2 showed monoclinic system and the β value thereof was within the range from 110° to 97°. Further, a peak attributable to (20-2) face was observed in the range of 2θ value from 40° to 44°, and a peak attributable to (00-2) was present between (110) face and (11-1) face.

The capacities of the cathode active materials of Example 2 were measured in the same manner as in Example 1. Table 1 shows the measurement of the capacities of Example 2. The capacity was 155 mAh/g for the cathode active material (6), 147 mAh/g for the cathode active material (7), 157 mAh/g for the cathode active material (8) and 150 mAh/g for the cathode active material (9). Larger capacity was obtained as the effect of the invention compared with spinel lithium manganate (LiMn₂O₄) of Comparative Example 5 to be described later.

### (Example 3)

As Example 3, a cathode active material (10) (LiNi_{0.6}Co_{0.3}Fe_{0.1}O_{1.95}F_{0.05}), a cathode active material (11) (LiNi_{0.4}Cr_{0.5}Cu_{0.05}Al_{0.05}O₂), a cathode active material (12) (LiCo_{0.6}Mn_{0.25}Fe_{0.2}Mg_{0.05}O₂) were synthesized.

As a material, lithium carbonate (Li₂CO₃), lithium fluoride (LiF), manganese dioxide (MnO₂), chromium oxide (Cr₂O₃), cobalt oxide (CoO), nickel oxide (NiO), iron oxide (Fe₂O₃), copper oxide (CuO), aluminum hydroxide (Al₂(OH)₃), and magnesium hydroxide (Mg(OH)₂) were used. After weighing them so as to form a desired composition, they were wet-mixed with ethanol at room temperature for 30 min by a planetary type ball mill and dried to form starting material powder. They were placed in an alumina box and baked in an argon atmosphere at 900°C for 12 hours to obtain a cathode active material.

Each of the cathode active materials of Example 3 was examined for the crystal structure by powder X-ray diffractiometry with CuKα radiation in the same manner as in Example 1. Table 1 shows the analysis based on the result of the examination. Each of the obtained cathode active materials of Example 3 showed rhombic system.

Further, The capacities of the cathode active materials of Example 3 were measured in the same manner as in Example 1. The capacity was 171 mAh/g for the cathode active material (10), 153 mAh/g for the cathode active material (11) and 148 mAh/g for the cathode active material (12). Larger capacity was obtained as the effect of the invention compared with spinel lithium manganate (LiMn₂O₄) of Comparative Example 5 to be described later.

### (Comparative Example 2)

The cathode active materials were synthesized as Comparative Example 2 in the same manner as in Example 2 except the change of the weighing ratio of the starting materials, that is, a comparative cathode active material (3) (LiNi_{0.75}Co_{0.25}O₂) and a comparative cathode active material (4) (LiMn_{0.25}Fe_{0.3}Cr_{0.45}O₂). Incidentally, the baking atmosphere was an atmospheric air only for the comparative cathode active material (3).

The crystal structure was examined by powder X-ray diffractiometry with CuKα radiation in the same manner as in Example 1. Table 1 shows the analysis based on the result of the examination. The obtained comparative cathode active material (3) was hexagonal system and the comparative cathode active material (4) was tetragonal system in the crystal structure.

Further, a charging/discharging test for measuring the charging capacity was conducted in the same manner as in Example 1. Table 1 shows the measurement of the capacity of each cathode active material of Comparative Example 2. The capacity was 175 mAh/g for the comparative cathode active material (3) and 149 mAh/g for the comparative cathode active material (4).

### (Example 4)

A battery (1) was manufactured as a cylindrical lithium ion secondary battery of Example 4 according to this invention by using the cathode active material (1) of the invention as described below.

At first, a cathode plate was prepared. Flaky graphite and acetylene black were admixed as a conductive agent to a powder of the cathode active material (1) and, further, a solution of PVDF previously dissolved in NMP as a binder was admixed to prepare cathode mix slurry. The weight ratio of the cathode active material, the flaky graphite, acetylene black and PVDF was controlled as 88:5:1:6 as the dry weight. The slurry was coated substantially uniformly and homogeneously to an aluminum foil (cathode collector) of 20 µm in thickness. After coating and drying at a temperature of 80°C, coating and drying was conducted in the same procedures on both surfaces of the aluminum foil. Subsequently, it was compression molded by a roll press and cut into a coating width of 5.4 cm and coating length of 50 cm, to which a lead made of an aluminum foil was welded for taking out a current to prepare a cathode plate.

Subsequently, an anode plate was prepared. A solution formed by dissolving PVDF in NMP was added to flaky graphite A as the active material and further mixed to prepare anode mix slurry. In this case, flaky graphite and PVDF was adjusted to 92:8 by dry weight ratio. The slurry was coated substantially uniformly and homogeneously on a rolled copper foil (anode collector) of 10 µm in thickness. Coating and drying were conducted on both surfaces of the rolled copper foil in the same procedures as those for the cathode. Subsequently, it was compression molded by a roll press, cut into a coating width of 5.6 cm and a coating length of 54 cm, to which a lead made of a copper foil was welded to prepare an anode plate.

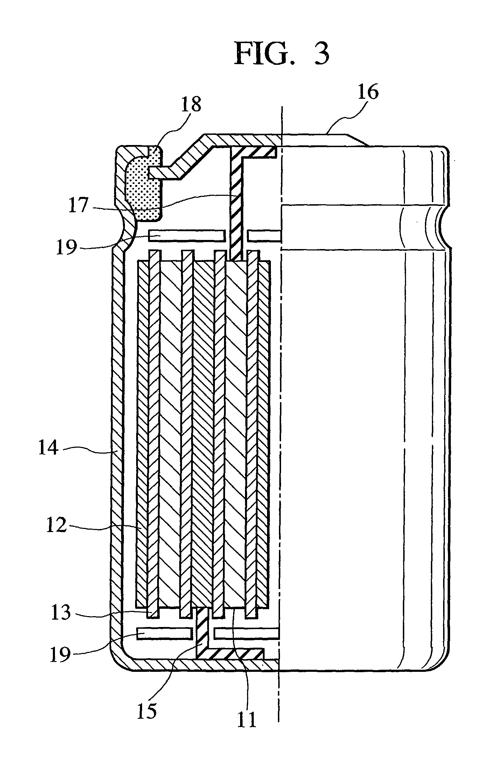

A cylindrical battery schematically shown in Fig. 3 was manufactured by using the thus prepared cathode plate and anode plate. The prepared cathode plate 11 and anode plate 12 were wound with a separator being put therebetween such that they were not in direct contact with each other to prepare an electrode group. In this case, a lead 17 for the cathode plate and a lead 15 for the anode plate were situated on both end faces on the sides of the electrode group opposite to each other. Further, the cathode mix coating area was formed so as not to exceed the anode mix coating area. The separator was a finely porous polypropylene film of 25 µm in thickness and 5.8 cm in width. The electrode group was inserted into a battery can 14 made of SUS, the negative lead 15 was welded to the bottom of the can and the positive lead 17 was welded to a sealing lid 16 also serving as an anode current terminal. After pouring a previously adjusted non-aqueous electrolyte (LiPF₆ dissolved by 1.0 mol/liter into a mixed solvent of EC and DMC at 1:2 volumic ratio) into the battery can, a sealing lid 16 attached with the cathode terminal was tightly sealed by way of a packing 18 to the battery can 14 by caulking to form a cylindrical battery of 18 mm in diameter and 65 mm in length (battery (1)). The sealing lid was provided with a relief valve to burst upon increase of the pressure in the battery thereby escaping or releasing the pressure. Reference numeral 19 denotes an insulation plate.

Batteries were manufactured in the same manner by using the cathode active material (2), the cathode active material (3), the cathode active material (4) and the cathode active material (5) prepared in Example 1. That is, in the lithium ion secondary batteries of this example, a battery (2) uses the cathode active material (2), a battery (3) uses the cathode active material (3), a battery (4) uses the cathode active material (4), and a battery (5) uses cathode active material (5).

The capacities of the respective manufactured batteries in Example 4 were measured. The charging conditions included constant current/constant voltage charging of conducting constant current charging at a charging current of 200 mA to a charge termination voltage of 4.2 V and then conducting charging at a constant voltage of 4.2 V for 8 hours in total. Discharging was conducted as a constant current discharging at a discharging current of 200 mA down to a charge termination voltage of 2.5 V. Table 2 shows the capacity of each of lithium ion secondary batteries in Example 4.

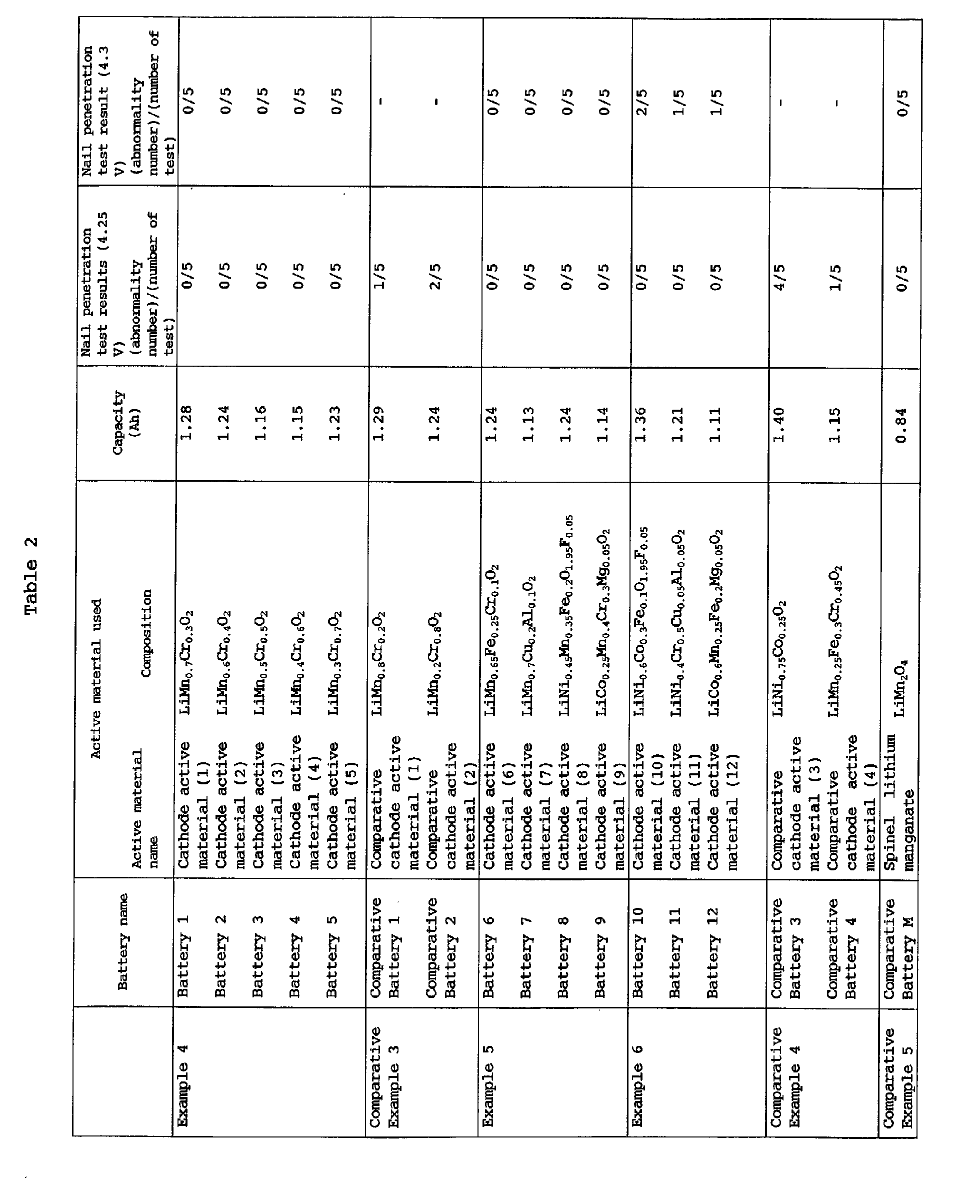

The discharging capacity was 1.28 Ah for the battery (1), 1.24 Ah for the battery (2), 1.16 Ah for the battery (3), 1.15 Ah for batteries (4) and 1.23 Ah for the battery (5), and larger capacity was obtained as the effect of the invention compared with comparative battery M of Comparative Example 5 to be described later.

Then, the safety of each of the lithium ion secondary batteries in Example 4 was tested by an internal short-circuit test (nail penetration test). Five batteries having their respective specifications were prepared and each tested under each of two charging conditions. The charging conditions were included (1) constant current/constant voltage charging of conducting constant current charging at a charging current of 200 mA to a charge termination voltage of 4.25 V and then conducting charging at a constant voltage of 4.25 V for 8 hours in total; (2) constant current/constant voltage charging of conducting constant current charging at a charging current of 200 mA to a charge termination voltage of 4.3 V and then conducting charging at a constant voltage of 4.3 V for 8 hours in total. A nail used for the test had a diameter of 5 mm. The nail was penetrated from the side of the battery at a penetration rate of 10 cm/min, and the presence or absence of abnormality such as the operation of the relief valve, fire or bursting were observed and the probability of occurrence was examined for the five batteries.

Table 2 shows the number of batteries that caused abnormality relative to the number of tested batteries in each of the lithium ion secondary batteries of Example 4. In any of lithium ion secondary batteries of Example 4, the abnormality such as the operation of the relief valve, fire and bursting was not observed under any of the charging conditions at 4.25 V and 4.3 V and they provided an effect capable of obtaining excellent safety compared with lithium ion secondary batteries of Comparative Example 3 and Comparative Example 4 to be described later.

### (Comparative Example 3)

As Comparative Example 3, a lithium ion secondary battery using a comparative cathode active material (1) (comparative battery (1)), and a lithium ion secondary battery using comparative cathode active material (2) (comparative battery (2)) were manufactured in the same manner as in Example 3.

The capacities of the respective lithium ion secondary batteries of Comparative Example 3 were measured in the same manner as in Example 3. Table 2 shows the capacities of the respective lithium ion secondary batteries of Comparative Example 3. The discharging capacity was 1.29 Ah for the comparative battery (1) and 1.24 Ah for comparative battery (2).

The safety of each of the lithium ion secondary batteries of Comparative Example 3 was tested by an internal short-circuit test (nail penetration test) in the same manner as in Example 3. However, charging conditions were only for those of constant current/constant voltage charging of conducting (1) constant current charging to a charge termination voltage of 4.25 V at a charging current of 200 mA and then conducting charging at a constant voltage of 4.25 V for 8 hours in total. Table 2 shows the number of batteries which caused abnormality relative to the number of tested batteries for each of the lithium ion secondary batteries of Comparative Example 3. The relief valve was operated in one of five tested batteries in the comparative battery (1) and two of five tested batteries in the comparative battery (2). Accordingly, they were poor in view of the safety compared with the lithium ion secondary batteries of Examples 4 to 6.

### (Example 5)

Cylindrical lithium ion secondary batteries of Example 5 according to this invention were manufactured by using the cathode active materials of Example 2 according to this invention in the same manner as in Example 4. That is, the lithium ion secondary battery used the cathode active material (6) for the battery (6); the cathode active material (7) for the battery (7); the cathode active material (8) for the battery (8); and the cathode active material (9) for the battery (9).

The capacities of the respective manufactured batteries of Example 5 were measured in the same manner as in Example 3. Table 2 shows the capacities of the respective lithium ion secondary batteries of Example 5. The discharging capacity was 1.24 Ah for the battery (6), 1.13 Ah for the battery (7), 1.24 Ah for the battery (8) and 1.14 Ah for the battery (9). A larger capacity was obtained as the effect of the invention compared with comparative battery M of Comparative Example 5 to be described later.

The safety of each of the lithium ion secondary batteries of Example 5 was tested by an internal short-circuit test (nail penetration test) in the same manner as in Example 4. Table 2 shows the number of batteries which caused abnormality relative to the number of tested batteries in each of the lithium ion secondary batteries of Example 5. In any of the lithium ion secondary batteries of Example 5, abnormality such as operation of the relieve valve, fire, bursting or the like was not observed under any of charging conditions of 4.25 V and 4.3 V to provide an effect of obtaining excellent safety compared with the lithium ion secondary batteries of Comparative Examples 3 and 4.

### (Example 6)

Cylindrical lithium ion secondary batteries of Example 6 according to this invention were manufactured by using the cathode active materials of Example 3 according to this invention in the same manner as in Example 4. That is, the lithium ion secondary batteries used the cathode active material (10) for the battery (10); the cathode active material (11) for the battery (11); and the cathode active material (12) for the battery (12).

The capacities of the respective manufactured batteries of Example 6 were measured in the same manner as in Example 4. Table 2 shows the capacities of the respective lithium ion secondary batteries of Example 6. The discharging capacity was 1.36 Ah for the battery (10), 1.21 Ah for the battery (11) and 1.11 Ah for the battery (12) to provide an effect capable of obtaining larger capacity compared with the comparative battery M of Comparative Example 5 to be described later.

The safety of each of the lithium ion secondary batteries of Example 5 was tested by an internal short-circuit test (nail penetration test) in the same manner as in Example 4. Table 2 shows the number of batteries which caused abnormality relative to the number of tested batteries in each of the lithium ion secondary batteries of Example 6. In any of the lithium ion secondary batteries of Example 6, abnormality such as operation of the relieve valve, fire, bursting or the like was not observed under the charging conditions of 4.25 V to provide an effect of obtaining excellent safety compared with lithium ion secondary batteries of Comparative Examples 3 and 4. In the nail penetration test under the charging condition of 4.3 V, a relief valve was operated in two of five tested batteries in battery (10), one of five tested batteries in battery (11) and one of five tested batteries in battery (12). Accordingly, the lithium ion secondary batteries of Example 6 were poor in the safety compared with lithium ion secondary batteries of Examples 4 and 5 described above.

### (Comparative Example 4)

As comparative Example 4, a lithium ion secondary battery using a comparative cathode active material (3) (comparative battery (3)), and a lithium ion secondary battery using a comparative cathode active material (4) (comparative battery (4)) were manufactured in the same manner as in Example 3.

The capacities of the respective lithium ion secondary batteries of Comparative Example 4 were measured in the same manner as in Example 3. Table 2 shows the capacities of the lithium ion secondary batteries of Comparative Example 4. The discharging capacity was 1.40 Ah for the comparative battery (3) and 1.15 Ah for the comparative battery (4).

The safety of each of the lithium ion secondary batteries of Comparative Example 4 was tested by an internal short-circuit test (nail penetration test) in the same manner as in Example 3. Table 2 shows the numbers of batteries which caused abnormality relative to the number of tested batteries in each of the lithium ion secondary batteries of Comparative Example 4. The relief valve was operated in four of five tested batteries in the comparative battery (3) and one of five tested batteries in the comparative battery (2). Accordingly, they were poor in view of the safety as compared with the lithium ion secondary batteries of Examples 4 to 6.

### (Comparative Example 5)

As Comparative Example 5, a lithium secondary battery (comparative battery M) using commercially available spinel lithium manganate (LiMn₂O₄) was manufactured in the same manner as in Example 1. The capacity of the material was 105 mAh/g.

The capacity of the comparative battery M of Comparative Example 5 was measured in the same manner as in Example 3. Table 2 shows the capacity of the comparative battery M. The discharging capacity of the comparative battery M was 0.84 Ah and the capacity was poor compared with the lithium ion secondary batteries of Examples 3 and 4 described above.

The safety of the comparative battery M was tested by the internal short-circuit test (nail penetration test) in the same manner as in Example 3. Table 2 shows the number of the batteries which caused abnormality relative to the number of the tested batteries of the comparative battery M. In the comparative battery M, abnormality such as operation of the relieve valve, fire, bursting or the like was not observed.

As has been described above, according to this invention, a cathode active material for use in a lithium ion secondary battery of excellent thermal stability and large capacity can be obtained by providing a composite oxide of a compositional formula: LiM1₁₋ₓ₋ₐM2ₓAₐO_{2-y}X_{y} (where M1 is one or more of transition metal elements selected from Mn, Co and Ni, M2 is one or more of transition elements selected from Cr, Fe and Cu, A is at least one typical element selected from Mg and Al, X is an anion excluding oxygen, and 0.3 ≦ x ≦ 0.7, 0 ≦ a ≦ 0.1, and 0 ≦ y ≦ 0.1), and the use of the cathode active material for the cathode of a lithium ion secondary battery can provide an effect of obtaining a lithium ion secondary battery at high energy density and of excellent safety.

Further, a cathode active material for use in a lithium ion secondary battery of further excellent thermal stability and large capacity is obtained when the cathode active material is a monoclinic system composite oxide at least containing Li, one of transition metal elements (M1) selected from Mn, Co and Ni, and one or more of transition metal elements (M2) selected from Cr, Mn, Fe, Co, Ni and Cu excluding M1, in which the range of an angle β formed between a axis and c axis of the crystallographic axes thereof is controlled as : 90° < β ≦ 110°, and the use of the cathode active material for the cathode of the lithium ion secondary battery can provide an effect of obtaining a lithium ion secondary battery having a high energy density and of more excellent stability.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. A cathode active material used for a cathode of a lithium ion secondary battery wherein the cathode active material is a composite oxide of a compositional formula: LiM1₁₋ₓ₋ₐM2ₓAₐO_{2-y}X_{y} (where M1 is one or more of transition metal elements selected from Mn, Co and Ni, M2 is one or more of transition elements selected from Cr, Fe and Cu, A is at least one typical element selected from Mg and Al, X is an anion excluding oxygen, and 0.3 ≦ x ≦ 0.7, 0 ≦ a ≦ 0.1, and 0 ≦ y ≦ 0.1).

2. A cathode active material used for a cathode of a lithium ion secondary battery as defined in claim 1, wherein the cathode active material is a monoclinic system composite oxide in which M2 is one or more of transition metal elements selected from Cr, Mn, Fe, Co, Ni and Cu, extruding M1.

3. A cathode active material used for a cathode of a lithium ion secondary battery in which the cathode active material is a monoclinic system composite oxide at least containing Li, one of transition metal elements (M1) selected from Mn, Co and Ni and one or more of transition metal elements (M2) selected from Cr, Mn, Fe, Co, Ni and Cu excluding M1, and an angle β formed between a axis and c axis of the crystallographic axes thereof ranges: 90° < β ≦ 110°.

4. A cathode active material used for a cathode of a lithium ion secondary battery as defined in claim 2, wherein the angle β formed between a axis and c axis of crystallographic axes thereof ranges: 90° < β ≦ 110°.

5. A cathode active material used for a cathode of a lithium ion secondary battery in which the cathode active material is a monoclinic system composite oxide at least containing Li, one of transition metal elements (M1) selected from Mn, Co and Ni and one or more of transition metal elements (M2) selected from Cr, Mn, Fe, Co, Ni and Cu excluding M1, and having at least one peak in the range of 2θ from 41° to 45° in an X-ray diffractiometry with CuKa radiation.

6. A cathode active material used for a cathode of a lithium ion secondary battery as defined in claim 2, having at least one peak in a range of 2θ from 41° to 45° in an X-ray diffractiometry with CuKa radiation.

7. A cathode active material used for a cathode of a lithium ion secondary battery wherein the cathode active material is a monoclinic system composite oxide at least containing Li, one of transition metal elements (M1) selected from Mn, Co and Ni and one or more of transition metal elements (M2) selected from Cr, Mn, Fe, Co, Ni and Cu excluding M1, and having at least one peak between diffraction peaks of a (110) face and a (111) face indexed by a monoclinic system in the X-ray diffractiometry with CuKa radiation.

8. A lithium ion secondary battery including a cathode having a cathode active material, an anode, a separator for electrically insulating the cathode from the anode, and a non-aqueous electrolyte, wherein the cathode has a cathode active material as defined in claim 1.
